(19) Europäisches Patentamt
European Patent Office
Office européen des brevets

(11) **EP 1 183 125 B2**

(12) **NEUE EUROPÄISCHE PATENTSCHRIFT**

(45) Veröffentlichungstag und Bekanntmachung des Hinweises auf die Entscheidung über den Einspruch:
**25.06.2008   Patentblatt 2008/26**

(45) Hinweis auf die Patenterteilung:
**11.08.2004   Patentblatt 2004/33**

(21) Anmeldenummer: **00938294.6**

(22) Anmeldetag: **05.06.2000**

(51) Int Cl.:
***B23K 9/10*** *(2006.01)*

(86) Internationale Anmeldenummer:
**PCT/AT2000/000158**

(87) Internationale Veröffentlichungsnummer:
**WO 2000/074888 (14.12.2000 Gazette 2000/50)**

(54) **VERFAHREN ZUR ERMITTLUNG DER SCHWEISSPROZESSSPANNUNG**

METHOD OF DETECTING A WELDING VOLTAGE

PROCEDE DE DETERMINATION D'UNE TENSION LORS DU SOUDAGE

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **04.06.1999   AT 99699**

(43) Veröffentlichungstag der Anmeldung:
**06.03.2002   Patentblatt 2002/10**

(73) Patentinhaber: **Fronius International GmbH**
**4643 Pettenbach (AT)**

(72) Erfinder:
• **ARTELSMAIR, Josef**
**A-4552 Wartberg/Krems (AT)**
• **BRUNNER, Michael**
**A-8055 Seiersberg (AT)**

(74) Vertreter: **Secklehner, Günter**
**Dr. Lindmayr, Dr. Bauer, Dr. Secklehner**
**Rosenauerweg 16**
**4580 Windischgarsten (AT)**

(56) Entgegenhaltungen:
EP-A- 0 868 959          DE-C3- 3 200 086
US-A- 5 043 557          US-A- 5 942 139

• MECKE ET AL.: "Schnelle elektronische Speisequellen für Schweisslichtbögen" ELEKTRIE, Bd. 48, Nr. 4, 1994, Seiten 143-150, XP000456369 berlin ,DE

EP 1 183 125 B2

## Beschreibung

Die Erfindung betrifft ein Verfahren zur Ermittlung der Schweißprozeßspannung gemäß Oberbegriff des Anspruchs 1.

Es ist bereits ein Verfahren und eine Schaltungsanordnung, gemäß DE 197 17 462 A1, zur Erfassung der Störgrößen und zum Ermitteln der Lichtbogenspannung bekannt, bei dem ein Istwert der Arbeitsspannung auf die für die Regelung der Schweißstromquelle erforderliche Summe der für den eigentlichen Schweißprozeß relevanten Teilspannungsabfälle über dem Lichtbogen und über dem vom Schweißstrom durchflossenen Ende der Elektrode reduziert wird, um somit nur noch die Nutzwiderstände, ohne zusätzliche die Regelung und damit die Übertragbarkeit, die Vergleichbarkeit, die Reproduzierbarkeit, die Prozeßstabilität und letztendlich die Qualität der Schweißung beeinflussende Störgrößen, zur Regelung heranzuziehen. Dabei wird bei dem Verfahren eine Erfassung der Arbeitsspannung an einer Schweißstromquelle durchgeführt, wobei außerhalb der Ausgangsklemmen der Stromquelle eine Erfassung der Arbeitsspannung als Summe der für den eigentlichen Schweißprozeß relevanten Teilspannungsabfälle über einem Lichtbogen und über einem vom Schweißstrom durchflossenen Ende einer Elektrode, sowie über einen Widerstand des Werkstückes erfolgt, wobei für die Erfassung zusätzliche Meßleitungen angeordnet werden. Diese sind mit einem Regler verbunden, sodaß über diese Meßleitungen der Spannungsabfall gemessen bzw. ermittelt werden kann.

Nachteilig ist hierbei, daß durch die Anordnung zusätzlicher Meßleitungen ein erheblicher Verdrahtungsaufwand für einen Schweißprozeß vonnöten ist und durch die parallele Führung zu den Schweißleitungen zusätzliche Störsignale auf die Meßleitungen einwirken, die mit einem hohen technischen Aufwand kompensiert werden müssen bzw. zu Fehlmessungen führen können.

Der Erfindung liegt die Aufgabe zugrunde, ein Verfahren zur Ermittlung der Schweißprozeßspannung zu schaffen, bei dem ohne besonderem Aufwand die berechneten oder ermittelten Störgrößen der Schweißprozeßspannung in den Regelprozeß eingebunden werden können.

Diese Aufgabe wird durch das Verfahren gemäß Anspruch 1 gelöst. Vorteilhaft ist hierbei, daß die Ermittlung der Störgrößen ohne hardwaretechnischen Aufwand durchgeführt werden kann und somit äußere Einflüsse vermieden werden. Ein weiterer Vorteil liegt darin, daß das Berechnungsverfahren für die Ermittlung der Störgrößen kontinuierlich oder periodisch durchgeführt werden kann, so daß bei einem Impulsschweißverfahren über dem gesamten Impulsverlauf eine Regelung stattfinden kann, wodurch es möglich ist, sehr kurze Impulse einzusetzen bzw. zu bilden, ohne daß dabei, wie aus dem Stand der Technik bekannt, ein entsprechender Bereich, welcher nicht regelbar ist, ausgeblendet werden muß.

Von Vorteil sind aber auch die Maßnahmen nach Anspruch 2, da dadurch eine sehr hohe Schweißqualität erzielt wird, da bei der Prozeßregelung die Störgrößen berücksichtigt werden können.

Es sind aber auch die Maßnahmen nach Anspruch 3 von Vorteil, da dadurch eine Anpassung an die Regelgeschwindigkeit oder an die benötigte Schweißqualität möglich ist, sodaß Schweißprozesse mit sehr hoher Regelgeschwindigkeit und hoher Schweißqualität realisiert werden können.

Die weiteren Maßnahmen nach Anspruch 4 sind vorteilhaft, da für die Ermittlung bzw. Berechnung keine weitere Steuervorrichtung eingesetzt werden muß, sondern diese Berechnung von jener Steuervorrichtung für die Prozeßregelung durchgeführt werden kann.

Vorteilhaft sind auch die Maßnahmen nach Anspruch 5, da dadurch ein standardisierter Geräteaufbau verwendet werden kann.

Die weiteren Maßnahmen nach den Ansprüchen 6 bis 8 sind insofern von Vorteil, da dadurch erreicht wird, daß ein einfaches Berechnungsmodell für die Ermittlung des ohmschen Widerstandes und der Induktivität eingesetzt werden kann.

Von Vorteil sind auch die Maßnahmen nach den Ansprüchen 9 und 10, da dadurch auch während eines Schweißprozesses eine Störgrößenberechnung durchgeführt werden kann, ohne daß dabei der Schweißprozeß unterbrochen werden muß.

Schließlich sind aber auch die Maßnahmen nach den Ansprüchen 11 und 12 von Vorteil, da dadurch die Schweißprozeßregelung optimiert werden kann und durch ein Software-Update in einfacher Form ältere Schweißgeräte oder Schweißstromquellen kostengünstig umgerüstet werden können.

Die Erfindung wird anschließend durch ein Ausführungsbeispiel näher beschrieben.

Es zeigen:

Fig. 1    eine schematische Darstellung einer Schweißmaschine bzw. eines Schweißgerätes;

Fig. 2    ein Ersatzschaltbild des Schweißgerätes bzw. Schweißstromkreises, in vereinfachter, schematischer Darstellung.

Einführend wird festgehalten, daß in den einzelnen Darstellungen des Ausführungsbeispieles gleiche Teile mit

gleichen Bezugzeichen versehen werden. Die in den einzelnen Ausführungsbeispielen angegebenen Lageangaben sind bei einer Lageänderung sinngemäß auf die neue Lage zu übertragen.

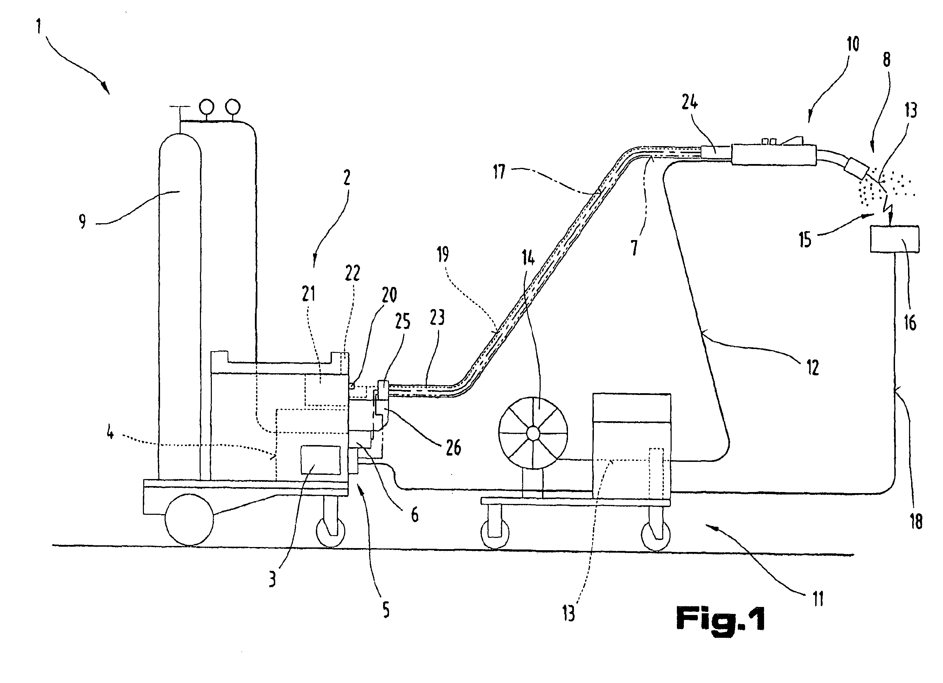

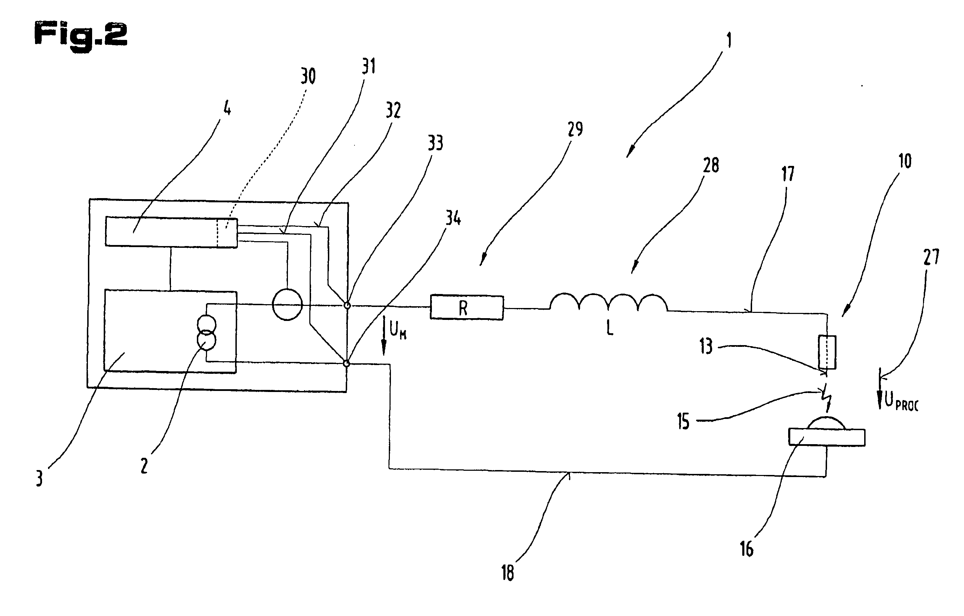

In den Fig. 1 und 2 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordnetem Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise $CO_2$, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Drahtführungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht wie in Fig. 1 dargestellt als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Stromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet werden kann und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Bei dem dargestellten Schweißgerät 1 bzw. der Schweißanlage ist nunmehr in der Steuervorrichtung 4 das erfindungsgemäße Verfahren zum Berechnen der Störgrößen und einer Schweißprozeßspannung 27, welche schematisch im Bereich des Lichtbogens 15 dargestellt ist, integriert. Da dieses Verfahren durch ein Softwareprogramm realisiert ist, wird auf weitere Figuren verzichtet. Damit jedoch dieses Verfahren von der Steuervorrichtung 4 ausgeführt werden kann, ist die Steuervorrichtung 4 beispielsweise durch eine Mikroprozessorsteuerung gebildet. Selbstverständlich ist es möglich, daß in dem Schweißgerät 1 jede andere Art einer Steuervorrichtung 4 zur Abarbeitung von Softwareprogrammen, wie beispielsweise eine SPS-Steuerung, ein Computer bzw. PC, usw. integriert ist.

Für das erfindungsgemäße Verfahren zur Ermittlung der Schweißprozeßspannung 27, bei dem eine Berechnung der Schweißprozeßspannung 27 in Echtzeit unter Berücksichtigung der Störgrößen Induktivität 28 und Widerstand 29 einer Schweißanlage durchgeführt wird, wird die tatsächliche Schweißprozeßspannung 27 die für die Schweißprozeßregelung herangezogen wird, mit der Formel

$$U_{proc}(t) = U_M(t) - (dI(t) * L) - (I(t) * R)$$

während der gesamten Prozeßdauer berechnet.

Die Definition der Formel lautet:

U$_M$(t)  Die aktuelle an den Schweißbuchsen, insbesondere von einer Meßvorrichtung 30 über Meßleitungen 31, 32 an Ausgangsklemmen 33, 34 gemessene Spannung;

dI(t)  Die aktuelle Stromänderung;

I(t)  Der aktuelle an den Schweißbuchsen gemessene Strom;

R  Der durch ein statisches Meßverfahren ermittelte oder ein mit bekannter Größe vorgegebener Widerstand 29;

L  Die während des Schweißprozesses berechnete Induktivität 28;

Da sich speziell bei Roboteranlagen die Schweißkreisinduktivität, insbesondere die Induktivität 28, während des Schweißprozesses laufend ändern kann wird diese kontinuierlich oder in bestimmten Zeitabständen während eines Schweißprozesses neu berechnet. Hierzu wird das bekannte Widerstandsverhalten des Lichtbogens 15, also das elektrische Verhalten des Lichtbogens 15, bzw. der konstante Widerstand während eines Kurzschlusses herangezogen und durch Analysieren des Strom- und Spannungsverlaufes die aktuelle Induktivität 28 ermittelt.

Weist ein Schweißverfahren keine prozeßbedingten Stromänderungen auf, welche für die Berechnung der Induktivität 28 notwendig wären, so kann durch das Aufmodulieren eines Stromimpulses, welcher für den Schweißprozeß keine Auswirkung hat, eine Berechnung der Schweißkreisinduktivität ermöglicht werden, d.h., daß für die Berechnung der Störgrößen während eines Schweißprozesses zu einem stabilen Zustand des Schweißprozesses auf dem Schweißstrom ein Abgleichimpuls aufmoduliert bzw. aufgeprägt wird und anschließend zu festgelegten Zeitpunkten die ermittelten Werte für die Berechnung herangezogen werden.

Die statische Störgrößenermittlung, welche vor dem eigentlichen Schweißprozeß gestartet werden kann, wird vom Benutzer oder auch von einem Roboter oder Automaten ausgelöst. Hierzu müssen die Enden der positiv gepolten und der negativ gepolten Schweißleitung 17, 18 z.B. beim MIG- oder MAG-Schweißen das Kontaktrohr des Schweißbrenners 10, beim WIG- oder Elektroden-Schweißen der Elektrodenhalter mit dem Werkstück 16 kurzgeschlossen und die Störgrößenermittlung gestartet werden. Die Widerstandsberechnung wird bei einem konstanten Strom zu einem vorgegebenen Zeitpunkt, d.h., dI = 0, durchgeführt, wobei dazu von der Steuervorrichtung 4 eine Messung bzw. die ermittelten Werte der Spannung und des Stromes an den Ausgangsklemmen 33, 34 der Stromquelle 2 für die Berechnung des Widerstandes 29, herangezogen werden. Bei diesem Prozeß kann nach der Widerstandsberechnung ein Stromimpuls aufgeprägt werden und somit sehr einfach die Induktivität 28 berechnet werden. Da sich der Schweißkreiswiderstand, insbesondere der ohmsche Widerstand 29, bei gleichbleibenden Anlagenaufbau kaum ändert, ist die Widerstandsermittlung nur bei der Erstinbetriebnahme oder nach einem Umrüsten der Anlage bzw. Schweißanlage notwendig.

Um die einzelnen Störgrößen berechnen zu können, ist in dem Schweißgerät 1 die Meßvorrichtung 30 angeordnet, die über Meßleitungen 31, 32 mit den Ausgangsklemmen 33, 34 der Stromquelle 2 verbunden sind. An den Ausgangsklemmen 33, 34 werden die Schweißleitungen 17, 18 für den Schweißbrenner 10 und das Werkstück 16 angeschlossen. Damit ist es möglich, daß von der Meßvorrichtung 30 die Spannung und der Strom an den Ausgängen der Stromquelle 2, insbesondere an den Ausgangsklemmen 33, 34, erfaßt bzw. gemessen werden. Insbesondere die Strommessung erfolgt wie schematisch angedeutet mittels einer eigenen Strommeßvorrichtung, welche das vom stromdurchflossenen Leiter aufgebaute Magnetfeld aufnimmt und in ein entsprechendes Spannungssignal umformt, welches von der Meßvorrichtung 30 bzw. Steuervorrichtung 4 ausgewertet und dabei auf den Iststrom Rückschluß gezogen wird.

Dieses Berechnungsverfahren hat den wesentlichen Vorteil, daß dadurch keine äußeren Einflüsse auf die Meßergebnisse der Meßvorrichtung 30 einwirken, da sehr kurze Meßleitungen 31, 32 verwendet werden können. Der Benutzer eines derartigen Schweißgerätes 1 hat keine weiteren Verdrahtungen für den Schweißprozeß durchzuführen, wodurch fehlerhafte Verbindungen oder mangelhafte Kontaktstellen ausgeschlossen werden können.

Für die unterschiedlichen Prozeßzustände werden die verschiedenen Berechnungsverfahren, welche in der Steuervorrichtung 4 hinterlegt sind, angewandt. Die Messung der Spannung und des Stromes an den Ausgangsklemmen 33, 34 über die Meßvorrichtung 30 und die Berechnung der Schweißprozeßspannung 27 wird kontinuierlich durchgeführt, sodaß zu jedem beliebigen Zeitpunkt der Istwert der Schweißprozeßspannung 27 zur Verfügung steht.

Durch das Durchführen des Berechnungsverfahrens ist es nunmehr möglich, daß von der Steuervorrichtung 4 nach dem Berechnen der Schweißprozeßspannung 27 diese zur Schweißprozeßregelung verwendet wird, wodurch eine optimale Schweißqualität erzielt wird. Dazu ist es möglich, daß in der Steuervorrichtung 4, welche bevorzugt durch eine Mikroprozessorsteuerung realisiert ist, Formeln für das Berechnungsverfahren hinterlegt sind.

Die Steuervorrichtung 4 hat durch Hinterlegung dieser Formel nunmehr die Möglichkeit die einzelnen Spannungen, insbesondere die einzelnen Teilspannungen an der Induktivität 28 und am Widerstand 29, auszurechnen. Durch die ermittelten bzw. berechneten Störgrößen wird eine Störgrößenkompensation im Regelprozeß bzw. im Schweißprozeß ermöglicht, d.h., daß bei der Regelung des Schweißprozesses diese Störgrößen berücksichtigt werden und somit eine exaktere Regelung durchgeführt werden kann. Gleichzeitig wird durch die Berechnung der Schweißprozeßspannung 27 erreicht, daß der tatsächliche Zustand an dem Schweißbrenner 10 bzw. am Schweißdrahtende für den Lichtbogen 15 bekannt ist und somit beispielsweise schneller ein Kurzschluß zwischen dem Schweißdraht 13 und dem Werkstück 16 erkannt werden kann, sodaß durch eine entsprechende Ansteuerung der Stromquelle 2 von der Steuervorrichtung 4 ein rasches Auflösen des Kurzschlusses durchgeführt werden kann und gleichzeitig Schweißspritzer vermieden werden können.

Durch die ständige Berechnung der Schweißprozeßspannung 27 ist es möglich, daß Änderungen im Prozeßablauf rechtzeitig erkannt werden können, unabhängig davon wie hoch die Stromänderungsgeschwindigkeit und die Schweißkreisinduktivität sind. Wird hingegen die gemessene Spannung an den Ausgangsklemmen 33, 34 für die Schweißprozeßregelung verwendet, so wird sich bei jedem fallenden Stromverlauf, d.h., negatives dI, ein geringerer Spannungspegel, als im Schweißprozeß vorhanden, einstellen. Als Folge daraus erkennt die Steuervorrichtung 4 bei jeder fallenden Flanke einen Kurzschluß, worauf die Prozeßregelung eine Stromerhöhung durchführt, obwohl im Schweißprozeß tatsächlich kein Kurzschluß vorhanden ist. Um dies zu vermeiden wird bei einem zum Stand der Technik zählenden Schweißverfahren in dieser Prozeßphase keine Kurzschlußerkennung durchgeführt bzw. diese Prozeßphase ausgeblendet, wodurch in dieser Phase tatsächlich auftretende Kurzschlüsse nicht erkannt werden.

Mit dem erfindungsgemäßen Verfahren ist eine Prozeßregelung über dem gesamten Impulsverlauf möglich, ohne daß dabei bestimmte Prozeßphasen ausgeblendete werden müssen.

Grundsätzlich ist zu erwähnen, daß dieses Verfahren softwaremäßig durchgeführt wird und zusätzlich für die Kompensation der Störgrößen bzw. für die Regelung des Schweißprozesses softwaremäßige Kontrollfunktionen von der Steuervorrichtung 4 ausgeführt werden können, d.h., daß die Berechnung der Störgrößen softwaremäßig unter Verwendung der ermittelten Werte von der Meßvorrichtung 30 und einem vorgegebenen Berechnungsprogramm von der Steuervorrichtung 4 durchgeführt wird und gleichzeitig über softwaremäßige Kontrollfunktionen die Richtigkeit des Ergebnisses überprüft wird.

Abschließend sei darauf hingewiesen, daß in dem zuvor beschriebenen Ausführungsbeispiel einzelne Teile unproportional vergrößert dargestellt wurden, um das Verständnis der erfindungsgemäßen Lösung zu verbessern. Dazu wurde in der Schweißleitung 17 zum besseren Verständnis der Erfindung die Störgrößen, insbesondere die Induktivität 28 und der Widerstand 29 schematisch eingezeichnet.

**Bezugszeichenaufstellung**

1 Schweißgerät
2 Stromquelle
3 Leistungsteil
4 Steuervorrichtung
5 Umschaltglied

6 Steuerventil
7 Versorgungsleitung
8 Gas
9 Gasspeicher
10 Schweißbrenner

11 Drahtvorschubgerät
12 Drahtführungsleitung
13 Schweißdraht
14 Vorratstrommel
15 Lichtbogen

16 Werkstück
17 Schweißleitung
18 Schweißleitung
19 Kühlkreislauf
20 Strömungswächter

21 Wasserbehälter
22 Ein- und/oder Ausgabevorrichtung
23 Schlauchpaket
24 Verbindungsvorrichtung
25 Zugentlastungsvorrichtung

26    Gehäuse
27    Schweißprozeßspannung
28    Induktivität
29    Widerstand
30    Meßvorrichtung

31    Meßleitung
32    Meßleitung
33    Ausgangsklemme
34    Ausgangsklemme

**Patentansprüche**

1.  Verfahren zur Ermittlung der Schweißprozeßspannung (27), wobei die Schweißprozeßspannung (27) zwischen einem Schweißbrenner (10) und einem Werkstück (16) ermittelt wird, **dadurch gekennzeichnet, daß** eine Berechnung der Schweißprozeßspannung (27) in Echtzeit unter Berücksichtigung der Störgrößen Induktivität (28) und Widerstand (29) einer Schweißanlage gemäß der Formel

$$U_{proc}(t) = U_M(t) - (dI(t) * L) - (I(t) * R)$$

durchgeführt wird; wobei die Definition der Formel derart lautet

$U_M(t)$ Die aktuelle an den Schweißbuchsen, insbesondere von einer Meßvorrichtung (30) über Meßleitungen (31, 32) an Ausgangsklemmen (33, 34) gemessene Spannung;
$dI(t)$ Die aktuelle Stromänderung;
$I(t)$ Der aktuelle an den Schweißbuchsen gemessene Strom;
$R$ Der durch ein statisches Meßverfahren ermittelter oder ein mit bekannten Größen vorgegebener Widerstand (29);
**L** Die Induktivität (28);

und wobei die Induktivität (28) während des Schweißprozesses berechnet wird.

2.  Verfahren nach Anspruch 1, **dadurch gekennzeichnet, daß** die berechnete Schweißprozeßspannung (27) von der Steuervorrichtung (4) zur Schweißprozeßregelung herangezogen wird.

3.  Verfahren nach Anspruch 1 oder 2, **dadurch gekennzeichnet, daß** ein Berechnungsverfahren zur Induktivitätsermittlung in bestimmten Zeitabständen während eines Schweißprozesses durchgeführt wird, ohne daß der Schweißprozeß **dadurch** beeinflußt wird.

4.  Verfahren nach einem der vorhergehenden Ansprüchen, **dadurch gekennzeichnet, daß** von der Steuervorrichtung (4) die Störgrößen, insbesondere der Widerstand (29) und/oder die Induktivität (28) des Schweißkreises, vor dem Start des eigentlichen Schweißprozesses ermittelt und/oder berechnet werden.

5.  Verfahren nach einem der vorhergehenden Ansprüchen, **dadurch gekennzeichnet, daß** von einer Meßvorrichtung (30) eine Spannung und ein Strom an den Ausgängen der Stromquelle (2), insbesondere an den Ausgangsklemmen (33, 34) der Stromquelle (2), gemessen werden.

6.  Verfahren nach einem der vorhergehenden Ansprüche, **dadurch gekennzeichnet, daß** für die statische Berechnung der Störgröße des Widerstandes (29) und der Induktivität (28) des Schlauchpaktes (23) und gegebenenfalls weiterer ohmscher Störgrößen bei einem sekundären Kurzschluß vor dem Start des Schweißprozesses ein Stromverlauf mit Stromänderung aufgeprägt wird und die gemessene Spannung ausgewertet wird.

7.  Verfahren nach Anspruch 6, **dadurch gekennzeichnet, daß** zu einem vorgegebenen Zeitpunkt des Stromverlaufes von der Steuervorrichtung (4) eine Messung erfolgt bzw. die ermittelten Werte der Spannung und des Stromes an den Ausgangsklemmen (33, 34) der Stromquelle (2) für die Berechnung des Widerstandes (29), herangezogen werden.

8. Verfahren nach Anspruch 6 oder 7, **dadurch gekennzeichnet, daß** für das statische Berechnen der Störgrößen, insbesondere des Widerstandes (29) und der Induktivität (28) des Schlauchpaketes (23), die Leitungen des Schlauchpaketes (23) kurzgeschlossen werden oder unter Berücksichtigung weiterer Störgrößen, insbesondere des Schweißbrenners (10), ein Kurzschluß zwischen der Elektrode am Schweißbrenner (10) und dem Werkstück (16) mit dem daran angeschlossenen Versorgungsleitungen (7) des Schlauchpaketes (23) geschaffen wird.

9. Verfahren nach einem der vorhergehenden Ansprüche, **dadurch gekennzeichnet, daß** für die Berechnung der Störgrößen während eines Schweißprozesses zu einem stabilen Zustand des Schweißprozesses auf den Schweißstrom ein Abgleichimpuls aufmoduliert bzw. aufgeprägt wird und anschließend zu festgelegten Zeitpunkten die ermittelten Werte für die Berechnung herangezogen werden.

10. Verfahren nach einem der vorhergehenden Ansprüche, **dadurch gekennzeichnet, daß** für die Berechnung der Störgrößen das elektrische Verhalten des Lichtbogens (15), insbesondere eine Lichtbogenkennlinie, miteinbezogen wird.

11. Verfahren nach einem der vorhergehenden Ansprüche, **dadurch gekennzeichnet, daß** eine Prozeßregelung bzw. Schweißprozeßregelung über einem gesamten Impulsverlauf durchgeführt wird.

12. Verfahren nach einem der vorhergehenden Ansprüche, **dadurch gekennzeichnet, daß** die Berechnung der Störgrößen softwäremäßig unter Verwendung der ermittelten Werte und eines vorgegebenen Berechnungsprogrammes von der Steuervorrichtung (2) durchgeführt wird.

**Claims**

1. Method of detecting the voltage (27) of a welding process, in which the welding process voltage (27) is detected between a welding torch (10) and a workpiece (16), **characterised in that** the welding process voltage (27) is calculated in real time taking account of interference variables pertaining to inductance (28) and resistance (29) in a welding system on the basis of the formula

$$U_{proc}(t) = U_M(t) - (dI(t) * L) - (I(t) * R),$$

the definition of the formula being as follows

$U_M(t)$ stands for the instantaneous voltage measured at the welding jacks, in particular at output terminals (33, 34) by a measuring device (30) via measuring lines (31, 32);
$dI(t)$ stands for the instantaneous change in current;
$I(t)$ stands for the instantaneous current measured at the welding jacks;
R stands for the resistance (29) determined by a static measuring process or pre-set to a known variable;
L stands for the inductance (28) calculated during the welding process.

2. Method as claimed in claim 1, **characterised in that** the control system (4) applies the calculated welding process voltage (27) to the welding process control.

3. Method as claimed in claim 1 or 2, **characterised in that** a calculation process for determining the inductance is run at specific time intervals during the welding process without the welding process being affected.

4. Method as claimed in one of the preceding claims, **characterised in that** the interference variables, in particular the resistance (29) and/or the inductance (28) of the welding circuit, are detected and/or calculated by the control system (4) prior to the start of the actual welding process.

5. Method as claimed in one of the preceding claims, **characterised in that** a voltage and a current at the outputs of the current source (2), in particular at the output terminals (33, 34) of the current source (2), are measured by a measuring device (30).

**6.** Method as claimed in one of the preceding claims, **characterised in that** the interference variable of the resistance (29) and the inductance (28) of the hose pack (23) and optionally other ohmic interference variables are calculated by imposing a current change on a current curve during a secondary short-circuit prior to the start of the welding process and the measured voltage is evaluated.

**7.** Method as claimed in claim 6, **characterised in that** a measurement is taken by the control system (4) at a given instant of the current curve and the detected values of the voltage and current at the output terminals (33, 34) of the current source (2) are used to calculate the resistance (29).

**8.** Method as claimed in claim 6 or 7, **characterised in that** the static calculation of the interference variables, in particular the resistance (29) and the inductance (28) of the hose pack (23), is run by short-circuiting the lines of the hose pack (23) or by producing a short-circuit between the electrode at the welding torch (10) and the workpiece (16) with the supply lines (7) of the hose pack (23) connected thereto and taking account of other interference variables, in particular of the welding torch (10).

**9.** Method as claimed in one of the preceding claims, **characterised in that** the interference variables are calculated for a stable state during a welding process by modulating or imposing a balancing pulse on the welding current and then applying the determined values to the calculation at fixed points in time.

**10.** Method as claimed in one of the preceding claims, **characterised in that** the behaviour of the arc (15), in particular an arc characteristic curve, is incorporated in the calculation of the interference variables.

**11.** Method as claimed in one of the preceding claims, **characterised in that** a process control or a welding process control is run during an entire pulse duration.

**12.** Method as claimed in one of the preceding claims, **characterised in that** the interference variables are calculated by the control system (2) by means of software using the detected values and a pre-set calculation programme.

**Revendications**

**1.** Procédé de détermination de la tension lors du processus de soudage (27), où la tension (27) du processus de soudage est déterminée entre un chalumeau à souder (10) et une pièce (16), **caractérisé en ce qu'**un calcul de la tension (27) lors du processus de soudage est effectué en temps réel en prenant en considération les grandeurs de perturbation inductivité (28) et résistance (29) d'une installation de soudage selon la formule

$$U_{proc}(t) = U_M(t) - (dI(t) * L) - (I(t) * R);$$

où la définition de la formule est la suivante:

$U_M(t)$ la tension actuelle aux prises de soudage, mesurée en particulier par un dispositif de mesure (30) par des lignes de mesure (31, 32) à des bornes de sortie (33, 34);
$dI(t)$ la modification actuelle du courant;
$I(t)$ le courant actuel, mesuré aux prises de soudage;
R la résistance (29) déterminée par un procédé de mesure statique ou prédéterminée avec des grandeurs connues
L l'inductivité (28) calculée pendant le processus de soudage.

**2.** Procédé selon la revendication 1, **caractérisé en ce que** la tension calculée (27) lors du processus de soudage est utilisée par le dispositif de commande (4) pour le réglage du processus de soudage.

**3.** Procédé selon la revendication 1 ou 2, **caractérisé en ce qu'**un procédé de calcul pour déterminer l'inductivité est effectué à des intervalles déterminés pendant un processus de soudage sans qu'il y ait un effet sur le processus de soudage.

**4.** Procédé selon l'une des revendications précédentes, **caractérisé en ce que** sont déterminées et/ou calculées par le dispositif de commande (4) les grandeurs de perturbation, en particulier la résistance (29) et/ou l'inductivité (28) du circuit de soudage, avant le début du processus de soudage proprement dit.

5. Procédé selon l'une des revendications précédentes,**caractérisé en ce que** sont mesurés par un dispositif de mesure (30) une tension et un courant aux sorties de la source de courant (2), en particulier aux bornes de sortie (33, 34) de la source de courant (2).

6. Procédé selon l'une des revendications précédentes, **caractérisé en ce que** pour le calcul statique de la grandeur de perturbation de la résistance (29) et de l'inductivité (28) du paquet de tuyaux (23) et le cas échéant d'autres grandeurs de perturbation ohmiques, lors d'un court-circuit secondaire, avant le début du processus de soudage, une évolution du courant avec variation du courant est imposée, et la tension mesurée est évaluée.

7. Procédé selon la revendication 6, **caractérisé en ce qu'**une mesure a lieu à un instant prédéterminé de l'évolution du courant par le dispositif de commande (4) respectivement les valeurs déterminées de la tension et du courant aux bornes de sortie (33, 34) de la source de courant (2) sont utilisées pour calculer la résistance (29).

8. Procédé selon la revendication 6 ou 7, **caractérisé en ce que** pour le calcul statique des grandeurs de perturbation, en particulier de la résistance (29) et de l'inductivité (28) du paquet de tuyaux (23), les lignes du paquet de tuyaux (23) sont court-circuitées ou bien, en considérant d'autres grandeurs de perturbation, en particulier du chalumeau à souder (10), un court-circuit est créé entre l'électrode au chalumeau à souder (10) et la pièce (16) avec les lignes d'alimentation (7) raccordées à celle-ci du paquet de tuyaux (23).

9. Procédé selon l'une des revendications précédentes, **caractérisé en ce que** pour le calcul des grandeurs de perturbation pendant un processus de soudage pour un état stable du processus de soudage, une impulsion d'égalisation est modulée respectivement imposée au courant de soudage et ensuite, à des instants fixés, les valeurs déterminées sont utilisées pour le calcul.

10. Procédé selon l'une des revendications précédentes, **caractérisé en ce que** pour le calcul des grandeurs de perturbation, le comportement électrique de l'arc (15), en particulier une ligne caractéristique d'arc, est également utilisé.

11. Procédé selon l'une des revendications précédentes, **caractérisé en ce qu'**un réglage du processus respectivement un réglage du processus de soudage est effectué sur une évolution complète d'une impulsion.

12. Procédé selon l'une des revendications précédentes, **caractérisé en ce que** le calcul des grandeurs de perturbation est effectué par un logiciel en utilisant les valeurs déterminées et un programme de calcul prédéterminé par le dispositif de commande (2).

Fig.1

**Fig.2**

**EP 1 183 125 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717462 A1